# EUROPEAN PATENT APPLICATION

(11) **EP 2 857 887 A1**
(43) Date of publication of application: **08.04.2015**
(21) Application number: 14186848.9
(22) Date of filing: 29.09.2014
(51) Int. Cl.: G02B 27/64, B60K 37/02, B60Q 3/04, G01D 11/28, G09G 3/02

(54) **Assembly and method to align displayed images to an overlaying applique**

(30) Priority: 03.10.2013 US 201314044963
(71) Applicant: Delphi Technologies, Inc., Troy MI 48007 (US)
(72) Inventor: Blackmer, Stephen, C., Millington, MI Michigan 48746 (US); Liburdi, Steven, A., Grosse Pointe Farms, MI Michigan 48236 (US)
(74) Representative: Robert, Vincent

(57) **Abstract**

An instrumentation assembly (12) suitable for use as a vehicle (10) instrument cluster, and a method (600) to align an image displayed by a reconfigurable display (20) of the assembly (12) to an applique (28) that overlays the display (20). The applique (28) defines a reference hole (40) located so light from the display (20) to passes through the reference hole (40). A light sensor (42) detects light from the display (20) that passes through the reference hole (40). A relative alignment between the display (20) and the applique (28) is determined based on the signal (46). The relative alignment is used to shift or reposition images on the display (20) so they align with features on the applique (28). The assembly (12) and method (600) also provide a way to adjust for image flicker of the display (20).

## Description

### TECHNICAL FIELD OF INVENTION

This disclosure generally relates to an instrumentation assembly, and more particularly relates to an assembly and a method to self-align images displayed on a reconfigurable display with an applique that overlays the reconfigurable display.

### BACKGROUND OF INVENTION

It is known to overlay a reconfigurable display such as a liquid crystal device (LCD) display with an applique for use in a vehicle. The applique may include trim rings or other features to make the display more attractive and more intuitive to read. It is preferable for the images displayed by the reconfigurable display to be precisely aligned with the applique. However, simple physical alignment features such as pins on the display configured to engage mounting holes on the applique often do not provide sufficient precision. As such, it has been suggested that a camera be used during manufacturing of a vehicle instrumentation assembly to correct for any misalignment by storing relative alignment and/or angular alignment information in a controller of the assembly. Undesirably, this alignment operation adds time to the manufacturing process, and does not correct for any change in the relative alignment of the display and applique that may occur due to vibration or changes in temperature.

It is also known that some reconfigurable display technologies benefit from calibration during manufacturing to correct for image flicker caused by dissimilar pixel off-to-on and on-to-off characteristics. One way to minimize image flicker is to adjust a control voltage value used by the display to switch the pixels of the display off-to-on and on-to-off. However, these characteristics may change over time and temperature, and so a single operating point type image flicker calibration during manufacturing has been found to be lacking.

### SUMMARY OF THE INVENTION

Described herein is a way to align images on a reconfigurable display with features of an applique that overlays the display. This ability to align the images is built into an assembly described herein so that the assembly can perform a self-alignment without assistance or support of equipment outside the assembly. Also described herein is a self-contained way to minimize image flicker that is also done without assistance or support of equipment outside the assembly.

In accordance with one embodiment, an instrumentation assembly suitable for use as a vehicle instrument cluster is provided. The assembly includes a reconfigurable display, an applique, a light sensor, and a controller. The reconfigurable display is operable to selectively illuminate one or more pixels of the display. The applique overlays the display. The applique defines a reference hole located so light from the display to passes through the reference hole. The light sensor is configured to detect light from the display that passes through the reference hole. The controller is configured to operate the display, receive a signal from the sensor, and determine a relative alignment between the display and the applique based on the signal.

In another embodiment, a method to align an image displayed by a reconfigurable display to an applique that overlays the display is provided. The method includes the step of operating the display to selectively illuminate one or more pixels of the display located about a reference hole in the applique. The method also includes the step of determining a first display location of the one or more pixels where light through the reference hole is maximized. The method also includes the step of determining a relative alignment between the display and the applique based on the first display location.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrumentation assembly in accordance with one embodiment;
Fig. 2 is a front view of the assembly of Fig. 1 in accordance with one embodiment;
Fig. 3 is an exploded view of the assembly of Fig. 2 in accordance with one embodiment;
Fig. 4 is a cut-away view of a portion the assembly of Fig. 2 in accordance with one embodiment;
Fig. 5 is a cut-away view of a portion the assembly of Fig. 2 in accordance with one embodiment; and
Fig. 6 is a flowchart of a method of operating the assembly of Fig. 1 in accordance with one embodiment.

### DETAILED DESCRIPTION

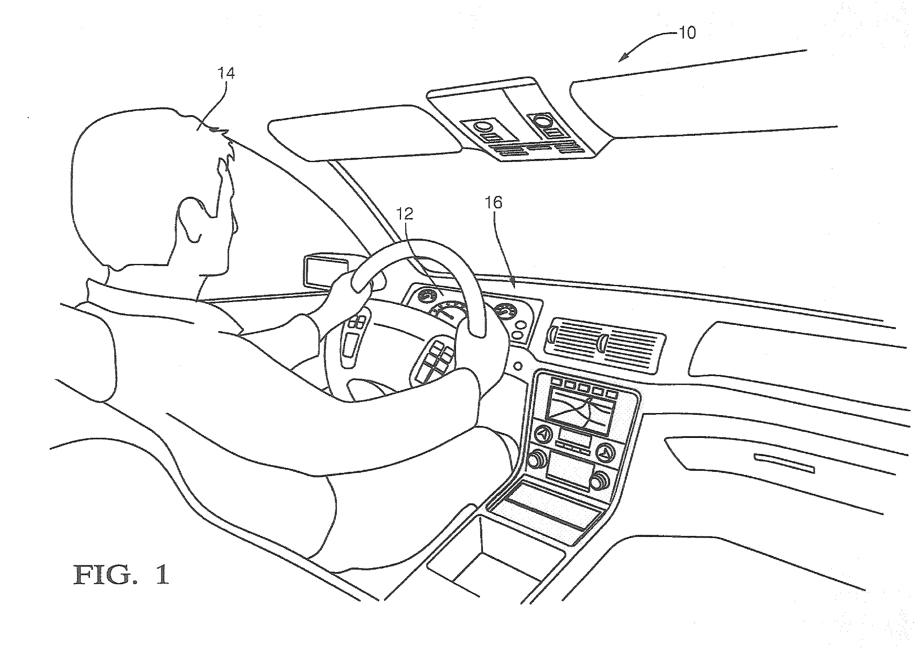

Fig. 1 illustrates a non-limiting example of a vehicle 10 equipped with an instrumentation assembly, hereafter referred to as the assembly 12, installed into a dashboard 16 of the vehicle 10. The assembly 12 may also be referred to by some as a vehicle instrument cluster. In general, the assembly 12 displays vehicle information to an operator 14 of the vehicle 10 such as vehicle speed, engine coolant temperature, and the like. The assembly 12 may be enclosed in a housing 18 to protect the assembly 12, and provide a means for attaching the assembly 12 to the vehicle 10, as will be recognized by those in the art.

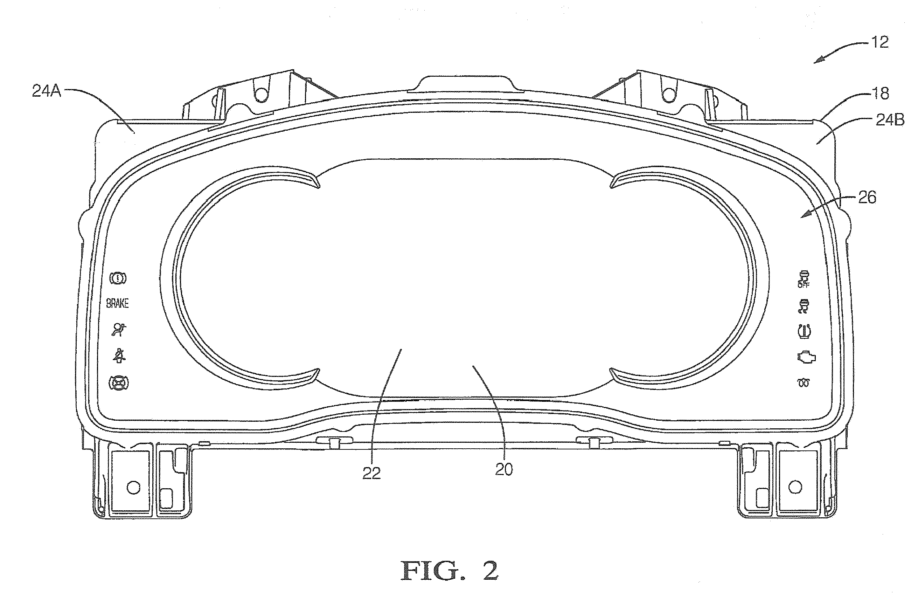

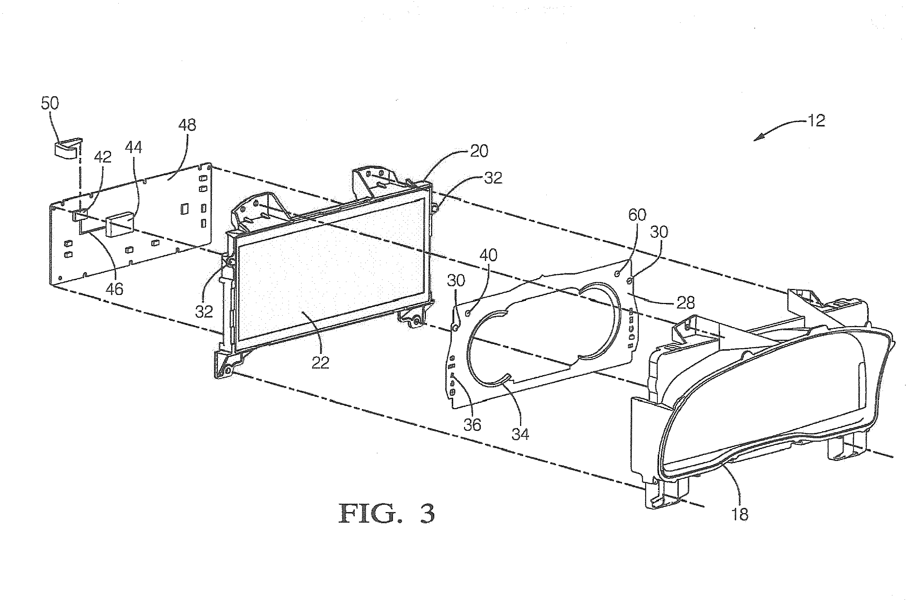

Fig. 2 illustrates a non-limiting example of the assembly 12 when the assembly 12 is not installed in the vehicle 10. The assembly 12 may include a reconfigurable display, hereafter referred to as the display 20. The display 20 may be, for example, a liquid crystal device (LCD) type display, or a light emitting diode (LED) type display, or any other suitable type of display that is generally operable to selectively illuminate one or more pixels 22 of the display 20. Such displays are typically rectangular in form (Fig. 3), and so the housing 18 may be configured to block from view a hidden area 24A, 24B of the assembly 12. This provides a way for a viewing area 26 of the assembly 12 to have a stylized shape suitable for use in a vehicle 10.

Fig. 3 further illustrates non-limiting features of the assembly 12. The assembly 12 includes an applique 28 that overlays the display 20. The applique 28 may include or define one or more mounting holes 30 that cooperate with one or more pins 32 on the display 20 to help locate the applique 28 with respect to the display 20 when the assembly 12 is being assembled. The applique 28 may include a trim ring 34 and/or telltales 36 that are be illuminated by the display 20. The trim ring 34 may include indices such as alignment marks and/or numerals. The need to precisely align illumination for these features and the relevant images (e.g. a pointer displayed by the display 20) provided by selectively illuminating the pixels 22 of the display 20 with the various features of the applique 28 should be apparent. However, it has been observed that the locating of the applique 28 relative to the display 20 using the mounting holes 30 and the pins 32 may not be precise enough for all instrument cluster designs and/or operating conditions, and so a means to better align and/or regularly realign images on the display 20 with features of the applique 28 is desired.

To this end, the applique 28 is advantageously configured to define a reference hole 40 located so light from or emitted by the display 20 to passes through the reference hole 40. Then, a light sensor, hereafter referred to as the sensor 42, may be provided and configured to detect light from the display 20 that passes through the reference hole 40. In general, the sensor 42 may be advantageously used to determine which of the pixels 22 is aligned with the reference hole 40. That is, as will be explained in more detail below, various combinations of the pixels 22 can be illuminated while monitoring a signal 46 from the sensor 42 so it can be determined which one or more of the pixels 22 on the display 20 are aligned with the reference hole 40. Including the sensor 42 is advantageous over other display to applique alignment techniques that rely on a separate camera as part of, for example, a manufacturing operation as the sensor 42 allows for the alignment to be verified and/or corrected after the assembly 12 leaves the manufacturing facility and is installed into a vehicle.

The reference hole 40 is preferably as small as possible so the relative alignment between the display and the applique can be determined as precisely as possible, while being large enough to allow adequate light from the display 20 to pass through the reference hole 40 to be detected by the sensor 42. As used herein, the relative alignment is based on an indication of what pixel identification (e.g. row and column) or location on the display 20 that the reference hole 40 is aligned with. Alternatively, the relative alignment may be an offset between an expected location relative to the display 20, and an actual location of the reference hole 40 relative to the display 20. The relative alignment may be in terms of, for example, a row and column number of the pixels 22, an X-axis and Y-axis distance from a corner of the display 20 or an expected location, or a range and angle (i.e. polar coordinates). The relative alignment is used to shift or reposition images on the display 20 so they align with features on the applique 28.

By way of example and not limitation, if the desired precision of the relative alignment is +/- 0.5mm, then a suitable diameter for the reference hole 40 (if the reference hole 40 is circular) may be 0.5mm. It is contemplated that the reference hole 40 may preferably be another shape, a triangle for example, if each of the pixels 22 is represented by a combination of a red, a blue, and a green subpixel in a triangular arrangement. Various ways that the relative alignment between the display 20 and the applique 28 can be determined will be described in more detail below. Preferably, for aesthetic reasons, the reference hole 40 is located in the hidden area 24A so that the reference hole 40, and the means for detecting light from the display 20 that passes through the reference hole 40 (e.g. the sensor 42), are not seen by the operator 14.

The assembly 12 may include a controller 44 configured to operate the display 20, receive the signal 46 from the sensor 42, and determine a relative alignment between the display 20 and the applique 28 based on the signal 46. The controller 44 may include a processor (not shown) such as a microprocessor or other control circuitry such as analog and/or digital control circuitry including an application specific integrated circuit (ASIC) for processing data as should be evident to those in the art. The controller 44 may include memory, including nonvolatile memory, such as electrically erasable programmable read-only memory (EEPROM) for storing one or more routines, thresholds and captured data. The one or more routines may be executed by the processor to perform steps for determining, storing, and positioning images on the display 20 to compensate for the relative alignment (i.e. misalignment) between the display 20 and the applique 28 as described herein.

In one embodiment, the controller 44 may determine the relative alignment only as part of an end-of-line test when the assembly 12 is manufactured. Alternatively, the controller 44 may be configured to determine the relative alignment each time electrical power is applied to the assembly12. Doing so may help to detect and compensate for longer term causes of movement between the applique 28 and the display 20 such as vibration. In another alternative embodiment, the controller 44 may be configured to determine the relative alignment periodically while the display is operating. By way of example and not limitation, the relative alignment may be determined at one minute intervals. Doing so may help to compensate for changes in the relative alignment due changes in temperature.

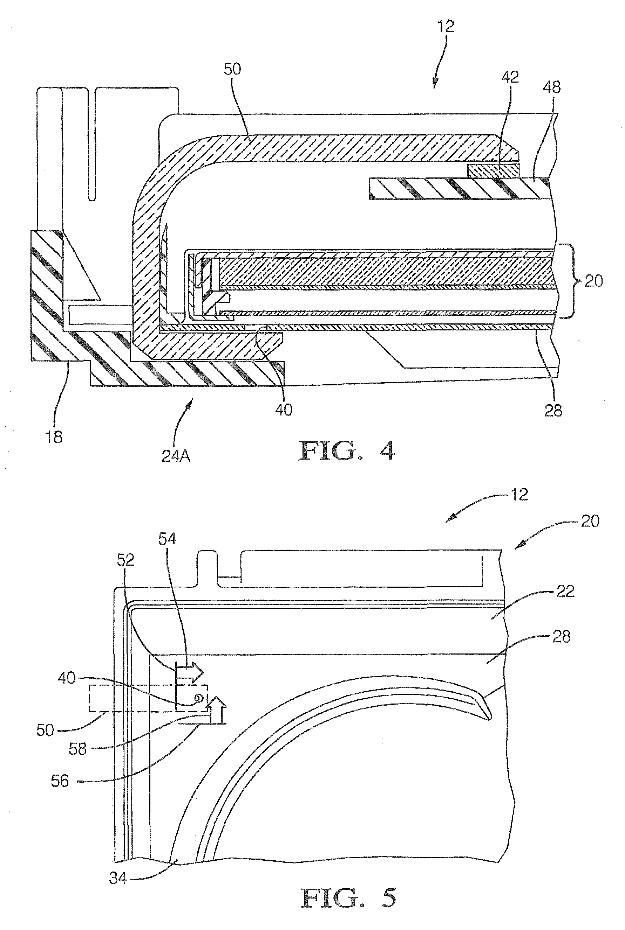

Fig. 4 further illustrates a non-limiting example of the assembly 12. The assembly 12 may include a circuit board 48 located behind (relative to the operator 14) the display 20. In this example, the sensor 42 is attached to the circuit board 48 at a location spaced apart from the reference hole 40. For this arrangement the assembly 12 may include a light pipe 50 configured to propagate light from the display that passes through the reference hole 40 to the sensor 42. The light pipe 50 may include a reflective surface at the corners of the light pipe where sudden changed in direction occurs, as will be recognized by those skilled in the art. Alternatively, the sensor 42 may be located in close proximity to the reference hole 40 so that adding the light pipe is unnecessary. However, this arrangement may require wires to conduct the signal 46 from the sensor 42 to the controller 44.

As suggested above, the controller 44 is generally configured to selectively illuminate one or more of the pixels 22 of the display 20 in a manner effective to determine the relative alignment. For example, the controller 44 may begin by operating the display 20 to show or display a circle or square substantially larger than the reference hole 40 so that light passes through the reference hole even if the worst case of misalignment between the display 20 and the applique 28 has occurred. Then a sequence of steps may be performed that shrink the size of the circle displayed and move the circle displayed until while monitoring the signal 46 until the relative alignment is determined. However this approach of determining the relative alignment may not be the most time efficient.

Fig. 5 further illustrates a non-limiting example of a way to determine the relative offset of the assembly 12. Instead of the shrinking circle approach suggested above, the controller 44 may be configured to display a vertical segment 52 with sufficient length and sweep the vertical segment horizontally (arrow 54) a sufficient distance to assure that at some instant the vertical segment 52 will align with the reference hole 40 so that light from the vertical segment 52 will be detected by the sensor 42. By monitoring the signal 46 as the vertical segment is swept in a horizontal direction, the controller 44 can determine which horizontal position of the vertical segment 52 caused a maximum light intensity to be indicated by the signal 46 from the sensor 42. The location of the vertical segment when the maximum occurs is used to determine a horizontal reference of the relative alignment. It should be recognized that the length of the segment would be selected based on a worst case tolerance stack analysis of misalignment between the display 20 and the applique 28, and the width of the segment would be selected based on the size of the reference hole 40.

Similarly, the controller 44 may be configured to display a horizontal segment 56 and sweep the horizontal segment vertically (arrow 58) to determine a vertical reference of the relative alignment. This would repeat the process of determining when the maximum light intensity indicated by the signal 46 occurs. Once the horizontal reference and the vertical reference are known, the relative alignment can be readily derived, as will be recognized by those in the art.

Referring again to Fig. 3, in some instances it may be sufficient to determine the relative alignment based on a single point of reference, e.g. the reference hole 40. However, in some instances, it may be desirable to determine the relative alignment based on two points of reference so that an angular alignment between the display 20 and the applique 28 can be determined. Accordingly, the applique 28 may also define an angular alignment hole 60 spaced apart from the reference hole 40. For the example described herein, a suitable location for the angular alignment hole 60 is the hidden area 24B as it is well spaced apart from the hidden area 24A. Light from the display 20 may be detected by a second light sensor (not shown). Alternatively, the light pipe 50 may be configured to conduct light from both the reference hole 40 and the angular alignment hole 60 to the sensor 42. It follows that the controller 44 may use the same process described above to determine the location of the angular alignment hole 60 relative to the display 20 based on light from the display 20 that passes through the alignment hole. Then, the relative alignment can be determined based on light from the display 20 that passes through both the reference hole 40 and the angular alignment hole 60.

Some display technologies such as LCD displays may require a form of calibration to reduce or minimize image flicker. While not subscribing to any particular theory, is has been observed that a control voltage sometimes called VCOM can be adjusted in an LCD display to reduce image flicker. Adjusting VCOM generally assures that the gate 'on' high voltage used to control a pixel is the same amplitude as the gate 'off' negative voltage. Once the relative alignment is known, the display 20 can be operated so light from the display 20 shines through the reference hole 40 and be detected by the sensor 42. If there is image flicker because VCOM is not properly adjusted or set, the signal 46 will indicate this flicker. The controller 44 may be configured to determine an image flicker value of light emitted by the display 20 based on the signal 46 by looking for variation in the signal 46. In addition, the controller 44 may be configured to adjust a control voltage value (e.g. VCOM) of the display 20 based on the image flicker value to minimize the image flicker.

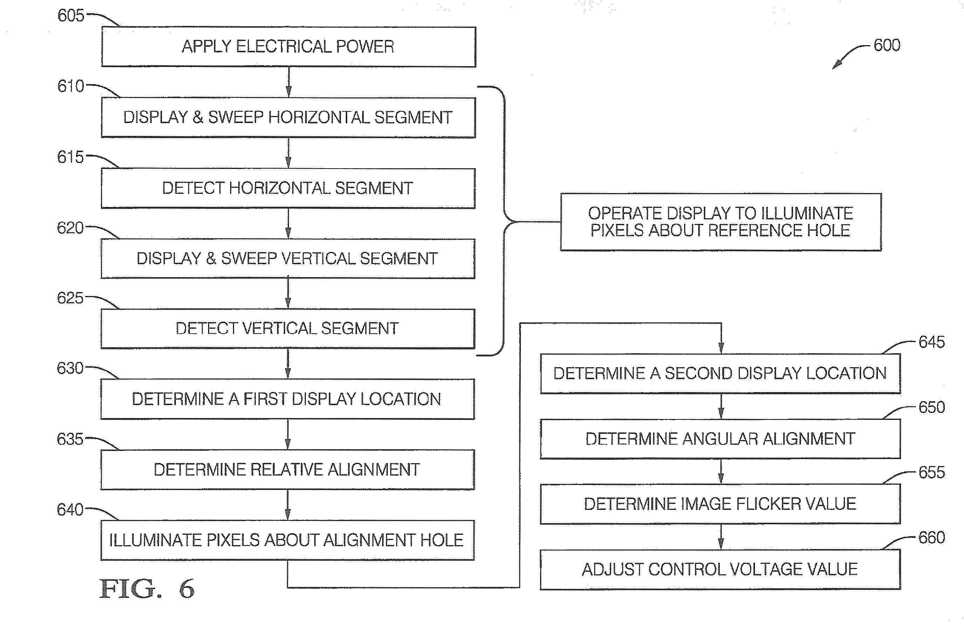

Fig. 6 illustrates a non-limiting example of a method 600 to align an image displayed by a reconfigurable display (the display 20) to an applique 28 that overlays the display 20. As will be explained below by way of examples, the method 600 seeks to determine if, for example, there is any misalignment between the display 20 and the applique 28. Misalignment can lead to images displayed on the display 20 not being properly aligned with features on the applique 28 such as indices or marks on a trim ring 34, or telltales 36. The method 600 may include further steps to minimize image flicker on the display 20.

Step 605, APPLY ELECTRICAL POWER, may include detecting that electrical power has been recently applied to the assembly as the result of, for example, the operator 14 starting the engine of the vehicle 10. As such, for this example, misalignment can be detected and corrected (i.e. the relative alignment can be determined) each time the assembly 12 is powered up. Alternatively, the step of detecting that electrical power has been applied may be replaced with a timer so that misalignment can be determined and corrected for on a periodic basis, once per minute for example. Determining the relative alignment on a period basis while the display is operating may be advantageous if changes in temperature can cause the degree of misalignment to shift or change, as wide variations in temperature while operating are expected in vehicle applications.

In general, the assembly performs a step that can broadly be described as OPERATE DISPLAY TO ILLUMINATE PIXELS ABOUT REFERENCE HOLE as shown on Fig. 6. Non-limiting examples of specific steps that correspond to this broad description are shown in Steps 610 - 625. In general, these steps suggest one possible way of operating the display 20 to selectively illuminate one or more of the pixels 22 of the display 20 located about the reference hole 40 in the applique 28.

Step 610, DISPLAY & SWEEP HORIZONTAL SEGMENT, may include the display 20 illuminating a combination of the pixels 22 that corresponds to the horizontal segment 56 shown in Fig. 5. The combination of the pixels 22 that are illuminated are then varied so it appears that the horizontal segment 56 moves or is swept vertically in the direction indicated by the arrow 58. If the horizontal segment 56 is sufficiently long, and the distance that the horizontal segment is swept is sufficiently large, at some point the horizontal segment 56 will intersect the reference hole 40, and light from the display 20 will be detected by the sensor 42.

Step 615, DETECT HORIZONTAL SEGMENT, may include the controller 44 monitoring or measuring the signal 46 while noting which of the pixels 22 is being illuminated, and storing the display location (i.e. the pixel address) when the signal 46 indicates a maximum light intensity. By doing so, the controller 44 can determine a vertical reference for the relative alignment. In other words, the controller can determine a Y-axis (up/down) coordinate or variable that indicates the up/down position of the reference hole 40 with respect or relative to the display 20.

Step 620, DISPLAY & SWEEP VERTICAL SEGMENT, may include steps similar to those in step 610, except that a vertical segment 52 is displayed and swept or moved in a horizontal direction indicated by the arrow 54. As before the length of the vertical segment 52 and the distance that it is swept needs to be large enough so the vertical segment intersects the reference hole 40 for any amount of expected misalignment between the display 20 and the applique 28.

Step 625, DETECT VERTICAL SEGMENT, may include may include steps similar to those in step 615 so the controller 44 can determine a horizontal reference for the relative alignment. In other words, the controller can determine an X-axis (left/right) coordinate or variable that indicates the left/right position of the reference hole 40 with respect or relative to the display 20.

Step 630, DETERMINE A FIRST DISPLAY LOCATION, may include the controller 44 storing the location on the display 20 that corresponds to the location of the reference hole 40 indicated by the vertical reference and the horizontal reference determine is steps 615 and 625, respectively. As such, the assembly 12 is configured for determining a first display location of the one or more pixels 22 where light through the reference hole 40 is maximized.

Step 635, DETERMINE RELATIVE ALIGNMENT, may include adjusting or correcting a predetermined map or description of the applique 28 stored in the controller 44 to align images shown on the display 20 with the applique 28. Alternatively, the relative alignment may be stored as an offset in the X and Y directions that is applied by the controller 44 when designating which of the pixels 22 on the display 20 are to be illuminated. As such, the assembly 12 is configured for determining a relative alignment between the display and the applique based on the first display location.

It is recognized that determining the relative alignment based on a single point (i.e. the reference hole 40 only) is not able to discern if the applique 28 is rotated with respect to the display 20. As such, if determining a relative alignment between the applique 28 and the display benefits from or requires that relative alignment include an angular alignment measurement or determination, then the applique 28 may include an angular alignment hold 60 spaced apart from the reference hole 40 a sufficient distance so that an angular alignment (the relative angle between the display 20 and the applique) can be determined. It is recognized that an angular alignment could be determined by, for example, shaping the reference hole 40 like a slot or a cross. Then, the vertical segment 52 and/or the horizontal segment 56 could be rotated to determine an angular alignment based on only the intensity of light passing through the reference hole 40. However, it should be evident that the angular alignment can likely be more accurately determined if the angular alignment hold 60 is spaced apart from the reference hole 40 as far as possible.

Step 640, ILLUMINATE PIXELS ABOUT ALIGNMENT HOLE, may include executing steps similar to Steps 610 - 625 described above to determine what location or pixel address that the angular alignment hole is located.

Step 645, DETERMINE A SECOND DISPLAY LOCATION, may include, like Step 630, the controller 44 storing the location on the display 20 that corresponds to the location of the angular alignment hole 60 indicated by a vertical reference and a horizontal reference for the angular alignment hole 60.

Step 650, DETERMINE ANGULAR ALIGNMENT, may include adjusting or correcting a predetermined map or description of the applique 28 stored in the controller 44 to align images shown on the display 20 with the applique 28. The amount of adjustment for each pixel address may be stored in Cartesian coordinates or polar coordinates. The algorithm that determines how much offset is applied to each of the pixel addresses are based on well-known geometric formulas. It is recognized that the amount of offset may not be the same for all pixel addresses if there is a substantial amount of skew (relative angle difference) between the display 20 and the applique 28. As such, the assembly 12 is configured for operating the display to selectively illuminate one or more pixels of the display located about an alignment hole in the applique, wherein the alignment hole is distinct from and spaced apart from the reference hole; determining a second display location of the one or more pixels where light through the alignment hole is maximized; and determining an angular alignment between the display and the applique based on the first display location and the second display location.

Image flicker is a well-known problem for some display technologies. In general, image flicker arises from manufacturing variation that is difficult and/or expensive to control to the point where image flicker does not occur. Furthermore, the settings used to control image flicker when operating a display may vary with temperature and/or time. As such, it is desirable to be able to detect and correct or minimize image flicker while a display is being used. Automotive application present a special challenge for controlling image flicker because of wide operating temperature and general harshness of the vehicle environment. Accordingly, the method 600 may include the following steps to minimize image flicker.

Step 655, DETERMINE IMAGE FLICKER VALUE, may include the controller 44 monitoring or measuring the signal 46 to determine if variation in the signal 46 indicates the presence of image flicker. The controller 44 may be configured for determining an image flicker value of light emitted by the display 20 based on the signal 46.

Step 660, ADJUST CONTROL VOLTAGE VALUE, may include adjusting a control voltage value of the display 20 to minimize the image flicker value. As described above, this may include adjusting the value of VCOM as described above. Alternatively, the control voltage value may adjust a timing parameter or other voltage within the display 20 that can affect the amount of image flicker.

Accordingly, an assembly 12 and a method 600 to align an image displayed by a reconfigurable display to an applique that overlays the display is provided. The assembly 12 and the method 600 advantageously provide a way for the assembly to compensate for misalignment of the display 20 and the applique 28 without assistance from some other means such as a camera. As such, it can be said that the assembly 12 and the method 600 provide a way to self-align the display 20 and the applique 28. It is understood that this is not a physical alignment but a mapping or shifting of images displayed on the display 20 so that those images properly align with features on the applique 28.

While this invention has been described in terms of the preferred embodiments thereof, it is not intended to be so limited, but rather only to the extent set forth in the claims that follow.

## Claims

1. An instrumentation assembly (12) suitable for use as a vehicle (10) instrument cluster, said assembly (12) comprising:
a reconfigurable display (20) operable to selectively illuminate one or more pixels (22) of the display (20);
an applique (28) that overlays the display (20), wherein said applique (28) defines a reference hole (40) located so light from the display (20) to passes through the reference hole (40);
a light sensor (42) configured to detect light from the display (20) that passes through the reference hole (40); and
a controller (44) configured to operate the display (20), receive a signal (46) from the sensor (42), and determine a relative alignment between the display (20) and the applique (28) based on the signal (46).

2. The assembly (12) in accordance with claim 1, wherein the assembly (12) comprises
a housing (18) configured to enclose the assembly (12), wherein the reference hole (40) is hidden from view by the housing (18).

3. The assembly (12) in accordance with claim 1 or 2, wherein the assembly (12) comprises
a circuit board (48) located behind the display (20), wherein the light sensor (42) is attached to the circuit board (48); and
a light pipe (50) configured to propagate light from the display (20) that passes through the reference hole (40) to the light sensor (42).

4. The assembly (12) in accordance with any one of claims 1 to 3, wherein the controller (44) is configured to determine the relative alignment each time electrical power is applied to the assembly (12).

5. The assembly (12) in accordance with any one of claims 1 to 4, wherein the controller (44) is configured to selectively illuminate one or more pixels (22) of the display (20) in a manner effective to determine the relative alignment.

6. The assembly (12) in accordance with claim 5, wherein the controller (44) is configured to display (20) a vertical segment (52) and sweep the vertical segment (52) horizontally to determine a horizontal reference of the relative alignment, and/or is configured to display (20) a horizontal segment (56) and sweep the horizontal segment (56) vertically to determine a vertical reference of the relative alignment.

7. The assembly (12) in accordance with any one of claims 1 to 6, wherein the applique (28) defines an angular alignment hole (60) spaced apart from the reference hole (40), wherein the controller (44) is configured to determine an angular alignment between the display (20) and the applique (28) based on light from the display (20) that passes through the reference hole (40) and the alignment hole.

8. The assembly (12) in accordance with any one of claims 1 to 7, wherein the controller (44) is configured to determine an image flicker value of light emitted by the display (20) based on the signal (46).

9. The assembly (12) in accordance with claim 8, wherein the controller (44) is configured to adjust a control voltage value of the display (20) based on the image flicker value.

10. A method (600) to align an image displayed by a reconfigurable display (20) to an applique (28) that overlays the display (20), said method (600) comprising:
operating (610, 615, 620, 625) the display (20) to selectively illuminate one or more pixels (22) of the display (20) located about a reference hole (40) in the applique (28);
determining (630) a first display location of the one or more pixels (22) where light through the reference hole (40) is maximized; and
determining (635) a relative alignment between the display (20) and the applique (28) based on the first display location.

11. The method (600) in accordance with claim 10, wherein the display (20) and the applique (28) form an assembly (12), wherein the step of determining (635) the relative alignment is performed each time electrical power is applied to the assembly (12).

12. The method (600) in accordance with claim 10 or 11, wherein the display (20) and the applique (28) form an assembly (12), wherein the step of determining (635) the relative alignment is performed periodically while the display (20) is operating.

13. The method (600) in accordance with any one of claims 10 to 12, wherein operating the display (20) includes at least one or both of the following steps:
- displaying (620) a vertical segment (52) and sweeping (620) the vertical segment (52) horizontally to determine a horizontal reference of the relative alignment;
- displaying (610) a horizontal segment (56) and sweeping (610) the horizontal segment (56) vertically to determine a vertical reference of the relative alignment between the display (20) and the applique (28).

14. The method (600) in accordance with any one of claims 10 to 13, wherein said method (600) comprises
operating the display (20) to selectively illuminate one or more pixels (22) of the display (20) located about an alignment hole in the applique (28), wherein the alignment hole is distinct from and spaced apart from the reference hole (40);
determining (645) a second display location of the one or more pixels (22) where light through the alignment hole is maximized; and
determining (650) an angular alignment between the display (20) and the applique (28) based on the first display location and the second display location.

15. The method (600) in accordance with any one of claim 10 to 14, wherein the method (600) comprises
determining (655) an image flicker value of light emitted by the display (20).

16. The method (600) in accordance with claim 15, wherein the method (600) comprises
adjusting (660) a control voltage value of the display (20) to minimize the image flicker value.
